# FASCICULE DE BREVET EUROPEEN

(11) **EP 2 052 829 B1**
(45) Date de publication et mention de la délivrance du brevet: **14.12.2011**
(21) Numéro de dépôt: 08290857.5
(22) Date de dépôt: 12.09.2008
(51) Int. Cl.: B29C 33/38, B29C 45/26, B23P 15/24, A44B 18/00, B29C 45/34, B29C 33/10, B23K 20/02, B29C 33/42

(54) **Bloc d'insertion pour la formation d'un champ de crochets sur un objet moulé par injection et objet moulé comportant un champ de crochet de ce genre**
Einsatzblock zur Bildung eines Hakenfelds auf einem spritzgegossenen Gegenstand und spritzgegossener Gegenstand, der ein derartiges Hakenfeld enthält
Insertion block for forming a field of hooks on an injection-moulded object and moulded object comprising a field of hooks of this type

(30) Priorité: 26.10.2007 FR 0707533
(43) Date de publication de la demande: 29.04.2009
(73) Titulaire: Aplix, 75008 Paris (FR)
(72) Inventeur: Mahe, Antony, 44450 Saint Julien de Concelles (FR); Sachee, Quresh, Charlotte, NC 28277 (US)
(74) Mandataire: Intès, Didier Gérard André

(56) Documents cités:
- WO-A-97/46129
- WO-A-03/099506
- FR-A- 2 868 135
- US-A- 5 656 226
- US-A1- 2005 184 216
- US-B1- 6 224 364
- NAKAGAWA T ET AL: "LASER CUT SHEET LAMINATED FORMING DIES BY DIFFUSION BONDING" PROCEEDINGS OF THE INTERNATIONAL MACHINE TOOL DESIGN ANDRESEARCH CONFERENCE, XX, XX, 1 janvier 1985 (1985-01-01), pages 505-510, XP000603191

## Description

La présente invention se rapporte à un bloc d'insertion de moulage destiné à être mis dans un moule de formation d'un objet moulé, le bloc étant destiné à former un champ de crochets d'une pièce avec l'objet moulé. La présente invention se rapporte également à un objet moulé comportant un champ de crochets issu d'une pièce de l'objet moulé.

Lorsque l'on moule un objet de forme quelconque, notamment par injection et que l'on souhaite le doter d'un champ de crochets qui permettra de le fixer, par exemple par l'intermédiaire de boucles d'un tissu ou d'autres crochets qui coopéreront avec le champ de crochets, on réalise préalablement un bloc d'insertion destiné à être inséré dans le moule de fabrication de l'objet moulé, ce bloc d'insertion comportant en général un champ de cavités débouchant à sa surface supérieure et ayant une forme complémentaire de celle des crochets du champ de crochets à former. Ce bloc d'insertion est ensuite disposé dans le moule dans lequel va être formé par moulage l'objet moulé, les crochets étant ainsi formés en même temps que l'objet moulé et d'une pièce avec celui ci.

Les blocs d'insertion connus aujourd'hui sont constitués de plaques empilées les unes contre les autres et sur le champ ou bord supérieur de certaines desquelles sont réalisées par usinage, par exemple par électroérosion, attaque laser, découpe chimique, ou analogue, des découpe de forme complémentaire de celles de crochets. Les plaques empilées sont constituées en général de deux types de plaques, à savoir des plaques dont les champs comportent des découpes et des plaques sans découpe, ces dernières étant disposées entre deux plaques à découpes pour ainsi former les cavités, chaque cavité étant constituée d'une découpe et des parois latérales des plaques contiguës sans découpe. Cependant, on peut également empiler des plaques ayant toutes des découpes sur leur champ, en décalant les découpes formées dans deux plaques successives de sorte que la partie d'une plaque entre deux de ses découpes successives constitue une paroi latérale des cavités des plaques contiguës.

Une fois les plaques empilées les unes sur les autres, celles-ci sont pressées les unes contre les autres par des systèmes à mâchoires et/ou sont soudées à leurs périphéries pour les maintenir les unes contre les autres, une combinaison de ces deux procédés étant également possible. Un tel procédé est décrit dans US-A-5656226.

Ces blocs d'insertion de l'art antérieur présentent de nombreux inconvénients:
lorsqu'on les a placés dans le moule de formation de l'objet moulé auquel ils sont destinés à permettre d'ajouter le champ de crochets, il peut arriver que les plaques serrées les unes contre les autres ou soudées à leurs extrémités les unes contre les autres, sous l'effet de la pression d'injection de la matière thermoplastique, s'écartent légèrement les unes des autres pour laisser passer de la matière thermoplastique entre deux plaques successives. A la sortie du moule, le champ de crochets formé sur l'objet moulé présente alors une bavure constituée d'une sorte de paroi quelquefois de plus grande hauteur que les crochets et s'étendant sensiblement sur toute une largeur du champ de crochets, bavure qui peut rendre inutilisable ou pour le moins non conforme le champ de crochets pour une fixation, par exemple à un autre champ de crochets ou à des boucles d'un tissu. Ceci rend également inutilisable l'objet moulé dans son ensemble qui doit être envoyé au rebut. En outre, il convient ensuite de réparer le bloc d'insertion, c'est-à-dire arrêter le processus de fabrication de l'objet moulé, et faire en sorte que les plaques constituant le bloc d'insertion soient mieux serrées les unes contre les autres. Ceci, bien évidemment, entraîne des coûts en termes de temps, de personnel et de productivité.

D'autre part, il est difficile avec ces blocs inserts de l'art antérieur, en raison de la nécessité de serrer et maintenir les plaques les unes contres les autres de réaliser des inserts de faible épaisseur, par exemple inférieur à 10 mm.

En outre, les inserts actuels nécessitent un dispositif pour maintenir serrées entre elles les plaques, de sorte que l'installation dans le moule de l'insert et de ce dispositif de maintien/serrage nécessite beaucoup de place, entraînant en particulier une occupation de surface bien supérieure à la surface effectivement occupée par le champ de crochets formés par l'insert.

Dans le document "Laser Cut Sheet Laminated forming dies by diffusion bonding", il est décrit de former des moules en aggrégeant des feuilles stratifiées les unes aux autres en les soudant par diffusion.

L'invention vise à surmonter les inconvénients de l'art antérieur en proposant un bloc d'insertion du genre mentionné précédemment qui permet d'éviter complètement ou au moins dans une grande mesure l'apparition de bavures dans le champ de crochets après le moulage par injection. D'autre part, il est aussi possible d'obtenir des inserts très minces, ayant une surface sensiblement égale à celle de la zone de crochets sur l'objet moulé.

Suivant l'invention, un bloc d'insertion est tel que défini à la revendication 10.

En fixant les plaques les unes contre les autres par ce procédé, qui est un procédé de jonction de pièces pour former une pièce pleine, qui n'a pas besoin d'un interface liquide, comme dans le brasage, et qui ne produit pas de liaison poreuse par fusion et re-solidification, comme dans la soudure classique par fusion. On obtient un bloc d'insertion particulièrement résistant à la pression d'injection, et comme il n'y a plus d'interface entre les plaques, il n'est plus possible à la matière thermoplastique de s'y infiltrer pour créer une bavure, puisque les plaques ne peuvent plus s'écarter les unes des autres, étant soudées par diffusion.

En prévoyant ainsi un canal d'aération, on donne la possibilité à l'air poussé au fond de la cavité par la matière thermoplastique injectée dans la cavité de s'échapper par le fond de celle ci. La matière thermoplastique a moins tendance à s'infiltrer entre les plaques et à former des bavures, pour une force de serrage égale.

De préférence, le au moins un canal est réalisé de manière à communiquer avec la partie destinée à former la tête des crochets de la cavité.

Suivant un mode de réalisation préféré de l'invention, le canal ou les canaux d'aération présentent une section transversale en échelon, constituée d'une première partie de petite section et d'une deuxième partie de plus grande section que la petite section, la petite section étant destinée à réaliser la communication avec la partie de tête de la cavité de forme complémentaire des crochets, de sorte que de l'air peut passer dans cette section mais pas de la matière thermoplastique, et la section de grande dimension permet une évacuation rapide de l'air qui passe de la petite section dans la grande section, elle-même en contact avec l'extérieur.

Suivant un autre mode de réalisation préféré de l'invention, la section transversale du ou des canaux est évasée, partant d'une petite dimension par laquelle peut passer de l'air mais pas de la matière thermoplastique injectée, pour atteindre une grande dimension permettant une évacuation rapide de l'air.

Suivant un mode de réalisation préféré, la au moins une découpe auxiliaire est réalisée dans la au moins une première plaque.

De préférence, les deuxièmes plaques sont des plaques sans découpe.

Suivant un mode de réalisation possible, les deuxièmes plaques comportent sur leur bord au moins une découpe de deuxième plaque, et lorsque les deuxièmes plaques sont disposées contre la au moins une première plaque, la cavité de deuxième plaque est décalée par rapport à la cavité de la première planque, de sorte que la première plaque constitue une paroi pour la cavité de deuxième plaque et les deuxièmes plaques constituent chacune une paroi pour la cavité de la première plaque.

De préférence, le diamètre de la section équivalente de l'ouverture de communication entre la cavité et le canal d'aération est inférieure à 50 micromètres, de préférence comprise entre 10 micromètres et 40 micromètres.

Le soudage par diffusion d'au moins deux plaques consiste à assembler les plaques les unes contre les autres fortement en les maintenant pressées par un système de liaison sur toutes leurs surfaces. On chauffe ensuite, de préférence sous vide, l'outillage à une température classiquement égale à environ 0,5 à 0,8 fois la température de fusion du matériau des plaques. Le maintien de la pression entraîne alors une liaison par diffusion entre les plaques. On appelle soudage par diffusion le fait que sous une forte pression et avec une température proche de la fusion, les atomes se diffusent entre les plaques et permettent leurs liaisons respectives. Cette technique, en soi, est bien connue et on pourra se reporter, par exemple, à la demande de brevet américain n° 2005/0109821.

La présente invention se rapporte également à un Objet moulé en matière thermoplastique de forme quelconque ayant une surface extérieure formant plan de base de laquelle fait saillie au moins un crochet d'une pièce avec l'objet moulé. L'objet moulé et le au moins un crochet ayant été formés par moulage par injection, le au moins un crochet comportant une partie de base et une partie de tête ou d'accrochage faisant saillie de la partie de base, et étant délimité par des première et deuxième surfaces latérales s'étendant chacune sur la surface extérieure de l'objet moulé en étant séparées l'une de l'autre par une surface intermédiaire formant le chant du au moins un crochet, où les tronçons de courbe, définis par les intersections des première et/ou deuxième surfaces latérales avec les plans qui sont parallèles au plan de base et qui sont à des distances h données de ce plan de base, ayant des courbures respectives qui varient en fonction de la distance h, la courbure du tronçon de courbe pour h=0 (le plan de base et ledit plan parallèle étant confondu) étant supérieure à la courbure d'au moins un tronçon de courbe pour une distance h correspondant sensiblement à un niveau de la tête du au moins un crochet.

En effet, lors de la fixation des plaques par diffusion bonding une forte pression est appliquée sur les plaques empilées et il s'en suit une déformation des parois des cavités formées dans ces plaques. Il en résulte une forme concave des surfaces latérales, la concavité étant la plus prononcée au niveau de la base et allant en diminuant au fur à mesure que l'on va vers la tête du crochet (ou vers le fond de la cavité). En particulier, au niveau de la tête, cette concavité n'existe sensiblement plus. En revanche, ce sont souvent, en fonction des conditions de pression de matière, viscosité, etc..., les coins de la section qui deviennent arrondis.

De préférence, les tronçons de courbes des deux première et deuxième surface latérales ont des courbures telles que leur concavité sont opposées.

De préférence, au moins au niveau d'une partie dite de transition de la tête la transition entre au moins une des deux surfaces latérales et la surface intermédiaire se fait en douceur, c'est à dire sans partie en angle ou arête vive, notamment de manière incurvée.

De préférence, la surface intermédiaire est sensiblement perpendiculaire aux deux première et deuxième surfaces latérales.

En effet, suivant l'utilisation du nouveau bloc d'insertion suivant l'invention, contrairement à l'art antérieur, lorsque la matière thermoplastique pénètre dans la cavité en forme de tige, il n'y a pas ou moins d'échappatoire de l'air par les surfaces latérales (et ensuite par les interstices entre les plaques comme dans l'art antérieur) au niveau de la base du crochet, de sorte que l'écoulement de la matière thermoplastique est sensiblement homogène au niveau de la base de la tige, ou du moins plus homogène que dans le cas des systèmes de l'art antérieur. En revanche, au niveau de la tête, la matière thermoplastique aura tendance à s'écouler différemment, et notamment, compte tenu de la ventilation différente de la cavité. Selon la dimension et la position du canal d'aération de l'air peut avoir tendance à rester piégé au fond de la cavité en empêchant ainsi la matière thermoplastique d'atteindre les coins, de sorte que la forme des têtes des crochets après leur extraction des cavités ne comporte pas, comme dans l'art antérieur des parties angulaires, mais au contraire des parties incurvées.

Suivant un mode de réalisation préféré, l'épaisseur(distance entre les première et deuxième surfaces latérales) de la section transversale (section dans un plan parallèle au plan de base) diminue de la base du crochet vers la tête.

Suivant un mode de réalisation préféré, une première section transversale au niveau de la tête du crochet a une première section transversale ayant au moins un coin arrondi suivant un premier rayon de courbure, et une deuxième section transversale au niveau de la tête du crochet a une deuxième section transversale ayant au moins un coin arrondi suivant un deuxième rayon de courbure, la deuxième section étant plus proche de l'extrémité distale de la tête et le deuxième rayon étant supérieur au premier rayon.

Suivant un mode de réalisation préféré, une excroissance de section transversale (transversalement aux deux surfaces latérales et à la surface intermédiaire) plus petite que la section transversale de la tête de crochet fait saillie de l'extrémité distale de la tête du crochet. Cela est en particulier le cas lorsque la matière thermoplastique utilisée est très fluide ou que l'ouverture entre la cavité de moulage et les canaux d'aération est grande, de sorte que la matière thermoplastique pénètre par cette ouverture pour faire saillie dans les canaux d'aération.

Suivant un mode de réalisation préféré, au moins une partie de l'excroissance constitue la partie dite de transition de la tête, tandis que le reste du crochet en section transversale a la forme d'un quadrilatère, tel qu'un carré, rectangle, losange ou analogue.

Suivant un mode de réalisation préféré, la transition entre l'excroissance et la tête du crochet forme un épaulement ou coin.

Dans la présente invention, on entend par une transition qui se fait en douceur, c'est à dire sans partie en angle ou arête vive, notamment de manière incurvée, le fait que la courbe délimitant la section transversale (c'est à dire transversalement aux surfaces latérales et transversalement à la surface intermédiaire) du crochet au niveau de la transition, lorsqu'on la regarde au microscope ayant un grossissement d'au moins 150, est une courbe sans arête, notamment dont la dérivée première est continue.

On décrit maintenant un mode de réalisation de l'invention, donné uniquement à titre d'exemple, en se reportant aux dessins dans lesquels :
la Figure 1 est une vue de côté d'une plaque d'un bloc d'insertion ;
la Figure 2 est une vue en perspective d'un bloc d'insertion suivant l'invention constitué d'un empilement de plaques décrites à la Figure 1 et entre lesquelles ont été interposées des plaques sans cavités ;
les figures 3A et 3B sont des vues de dessus d'une partie de l'empilement de plaques de la figure 2, respectivement avant et après la soudure par diffusion ;
la Figure 4 représente un objet moulé comportant un champ de crochets, l'objet moulé et les crochets étant d'une pièce et obtenus par moulage par injection dans un moule dans lequel a été préalablement disposé le bloc d'insertion pour former le champ de crochets ;
la Figure 5 représente en perspective un crochet d'un champ de crochet obtenu à l'aide d'un insert de moulage suivant un mode de réalisation de l'invention ;
la Figure 6 est une vue en coupe transversale suivant la ligne A-A de la Figure 5 ;
la Figure 7 est une vue en coupe transversale suivant la ligne B-B de la Figure 5 ;
la Figure 8 est une vue en coupe transversale suivant la ligne C-C de la Figure 5 ;
la Figure 9 est une vue en coupe transversale suivant la ligne D-D de la Figure 5 ;
la Figure 10 est une vue en coupe transversale dans le plan P0 de base du crochet ;
la Figure 11 représente en perspective un crochet d'un champ de crochet obtenu à l'aide d'un insert de moulage suivant un autre mode de réalisation de l'invention ; et
la figure 12 représente en perspective un crochet d'un champ de crochet obtenu suivant encore une autre mode de réalisation de l'invention.

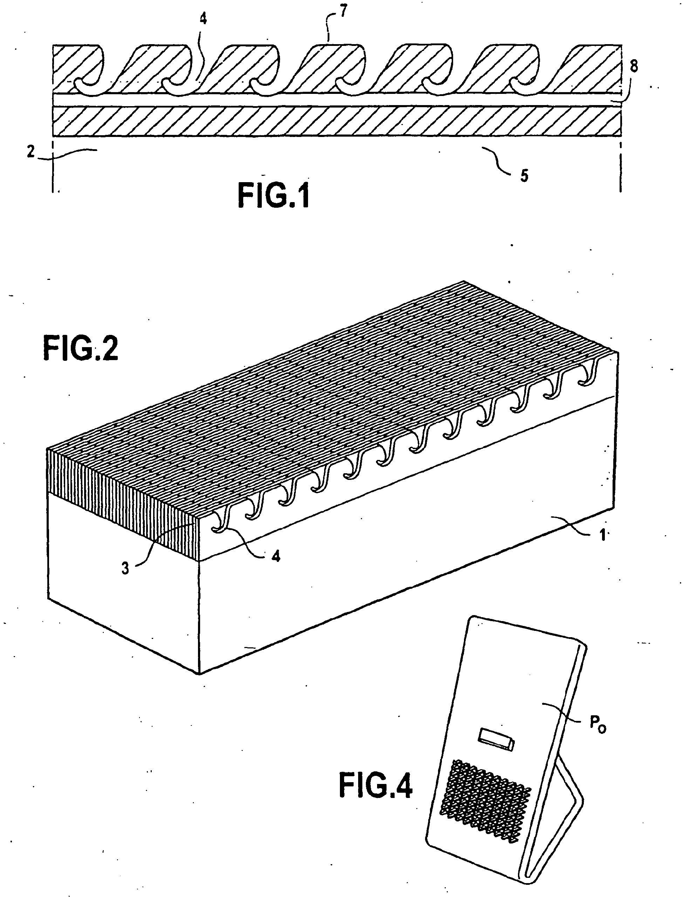

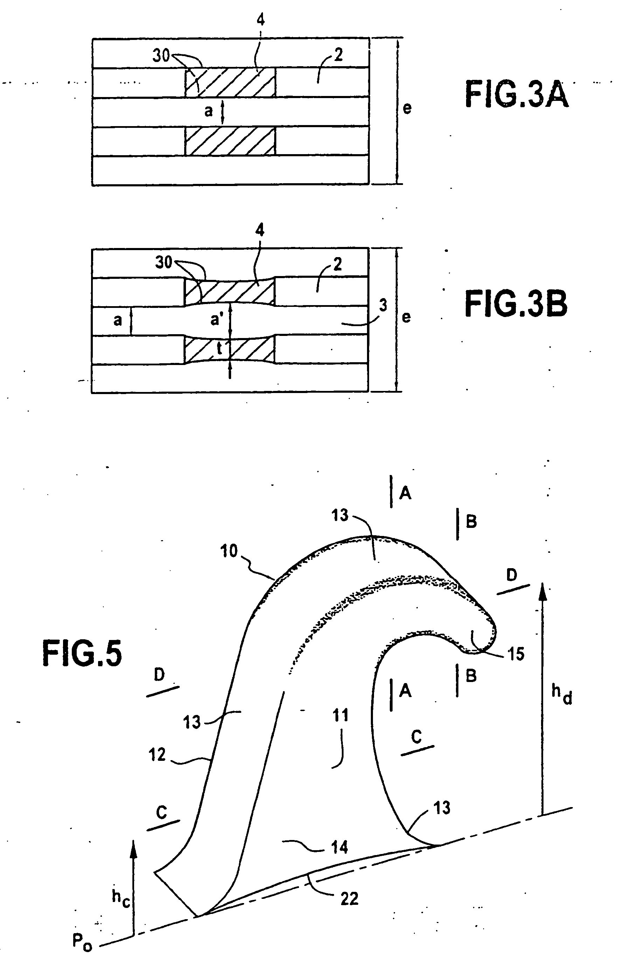

Le bloc 1 d'insertion, représenté aux Figures 2 et 3B, est constitué d'un empilement en alternance de plaques 2 comportant des découpes 4 de forme complémentaire de crochets et de plaques 3 ne comportant pas de découpe de forme complémentaire à la forme de crochets. La plaque 2, représentée à la Figure 1, est une plaque comportant deux faces latérales 5 et un bord ou champ 7 supérieur, au niveau duquel sont formées par électroérosion des découpes 4 de forme complémentaire de crochets que l'on souhaite former. Lorsque cette plaque 2 est disposée prise en sandwich contre deux plaques 3 sans cavités en forme de crochets, chaque découpe 4 forme avec les parois des plaques 3 contiguës une cavité fermée sur les côtés par deux parois latérales planes formées par les deux plaques 3 contiguës à la plaque 2 et cette cavité est ouverte sur le dessus par une ouverture supérieure formant la base d'un crochet. Il est, en outre, formé par électroérosion, dans les deux surfaces latérales 5 de la plaque à crochets, deux sillons 8 qui viennent couper les parties formant tête de la cavité de forme complémentaire de la forme d'un crochet. Chaque sillon est en échelon, en ayant une première partie de petite dimension en section transversale, de sorte que seul de l'air peut y passer et pas de la matière thermoplastique, et une deuxième partie de plus grande dimension en section transversale, qui permet d'évacuer l'air plus rapidement. On pourrait également former ces canaux échelonnés non pas dans la plaque à crochets, mais dans les plaques intermédiaires sans découpes en forme de crochet, ou à la fois dans les plaques intermédiaires et dans la plaque à crochets.

Une fois les plaques à découpe et les plaques intermédiaires réalisées, on les presse très fortement l'une contre l'autre et on effectue une liaison par diffusion (diffusion bonding) pour réaliser un bloc final, dans lequel tous les éléments sont liés. On peut, par exemple, utiliser un four de traitement thermique équipé d'un vérin d'une presse Demag qui maintient en pression les plaques les unes contre les autres pendant le cycle de diffusion des atomes entre les plaques (sous vide ou en présence de gaz neutre) sous l'effet conjugué de la température et de la pression, et qui va par diffusion permettre une liaison entre chaque plaque contiguë au niveau atomique pour réaliser au final un bloc dans lequel tous les éléments sont liés. A la fin de cette opération, les plaques ont subi une compression comprise entre 0,5 et 8%, de préférence entre 1 et 4%, notamment environ 2% et comme les parties vides (les cavités n'ont pas été affectées par cette compression) les parois 30 des cavités 4 dans la plaque 2 ont subi une déformation qui leur a donné un bombement qui s'estompe de la base ou ouverture vers le fond ou tête de la cavité. En pratique, cette déformation est d'environ 2% par rapport à l'épaisseur initiale de la plaque 3 intermédiaire, cette déformation pouvant varier entre 0,5 et 8%, de préférence entre 1% et 4%. Le bombement d'une des parois latérales a sa concavité orientée dans une direction opposée à la concavité du bombement de l'autre paroi latérale.

Le bloc d'insertion de la Figure 2 peut alors être disposé dans n'importe quel moule pour former un objet par moulage par injection. On peut, par exemple, fabriquer l'objet représenté à la Figure 4. Un champ de crochets correspondant aux crochets formés par les cavités du bloc 1 fait saillie de l'objet moulé et peuvent ainsi permettre sa fixation. La surface sur laquelle s'étend le champs est sensiblement inférieur à la surface totale de l'objet moulé, mais on peut également envisager un objet moulé dont une majorité de la surface est recouverte du champs de crochets. Lors de la formation de l'objet moulé, on injecte dans le moule, dans lequel on a préalablement inséré le bloc d'insertion à l'endroit sensiblement où l'on souhaite former le champ de crochets qui sera d'une pièce avec l'objet moulé, de la matière thermoplastique. Celle-ci va pénétrer dans les cavités du bloc d'insertion et, en raison de la présence des canaux d'aération, cette matière thermoplastique va bien aller jusqu'au fond des crochets en expulsant l'air en le poussant dans les canaux.

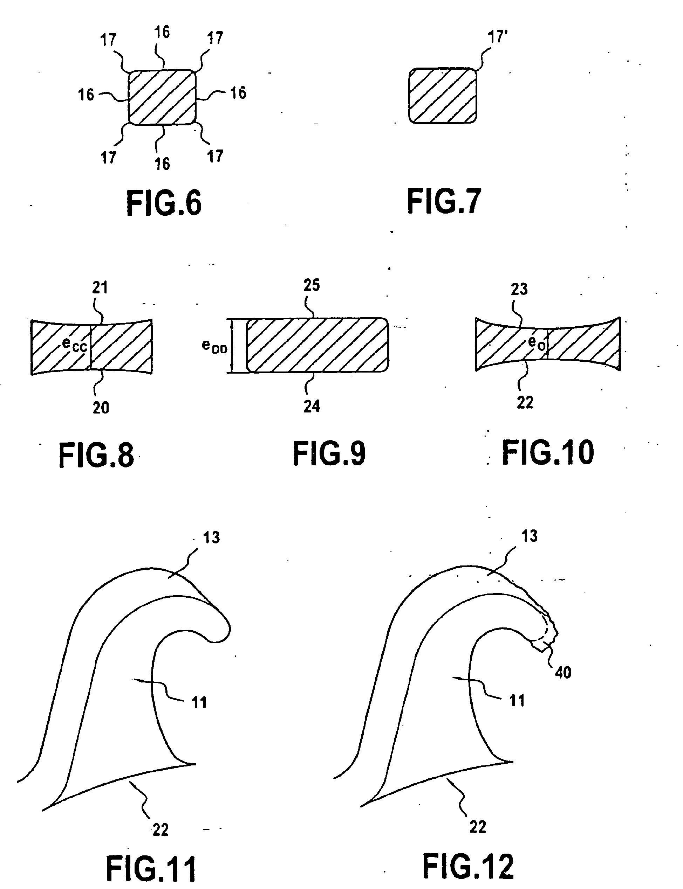

Aux Figures 5 et 6, il est représenté des crochets tel qu'obtenus suivant l'invention. Chaque crochet 10 est délimité par deux surfaces 11 et 12 latérales sensiblement planes et parallèles et par une surface intermédiaire 13 contiguë aux deux surfaces 11 et 12. La surface intermédiaire 13 est délimitée par les bords supérieurs des deux surfaces planes, du bas du crochet à droite jusqu'au bas du crochet à gauche en passant par le sommet de celui ci. La surface intermédiaire 13 forme le chant supérieur du crochet. Ces trois surfaces délimitent ainsi le crochet qui comporte une partie de base ou tige 14 et une partie de tête 15 faisant saillie de la partie de tige. Au niveau de la partie inférieure de la base ou tige, la transition entre chaque surface latérale et la surface intermédiaire est constituée d'une ligne, de sorte que les surfaces forment entre elles un angle, notamment droit, tandis qu'au niveau d'une partie de la tête, par exemple dans la partie supérieure, la transition entre les surfaces latérales et la surface intermédiaire se fait en douceur, de manière incurvée. Ainsi, la forme de la section transversale du crochet au niveau A-A de la tête est elle constituée, comme on le voit à la Figure 6, de quatre droites 16 reliées entre elles par des parties incurvées de grande courbures 17. Suivant l'endroit où la section est prise, on peut avoir une section transversale qui comporte tous ses coins arrondis, ou seulement un ou deux ou trois d'entre eux.

La section transversale B-B du crochet de la figure 5 et représentée à la figure 7 a une forme du même genre que celle de la coupe A-A de la figure 5, mais cependant les coins arrondis 17' ont un rayon de courbure plus grand que celui des coins arrondis 17 de la figure 5.

La section transversale C-C au niveau de la base, représentée à la figure 8 comporte des coins à forme vive, c'est-à-dire non arrondie et formant une sorte de point de rebroussement. Cependant, les deux tronçons de courbe 20 et 21 qui correspondent à l'intersection entre la surface latérales 11 et 12 respective et le plan parallèle au plan de base P0 et à distance hc de ce plan sont incurvées en ayant leur concavité vers l'extérieur du crochet et opposées l'une à l'autre.

De même, la section transversale au niveau du plan de base, représentée à la figure 10 comporte des coins à forme vive, c'est-à-dire non arrondie et formant une sorte de point de rebroussement. Cependant, les deux tronçons de courbe 22 et 23 qui correspondent à l'intersection entre la surface latérales 11 et 12 respective et le plan de base P0 sont incurvées en ayant leur concavité vers l'extérieur du crochet et opposées l'une à l'autre. La courbure ou concavité du tronçon 22 est supérieure à celle du tronçon 20 et celle du tronçon 23 est supérieure à celle du tronçon 21. De même, au niveau de la tête, les tronçons 24 et 25 correspondant à la section suivant la ligne D-D sont sensiblement rectilignes, leur concavité étant ainsi nulle et donc inférieure à celle des tronçons 20 et 21.

L'épaisseur e0 au niveau du plan de base est inférieure à l'épaisseur au niveau du plan C-C, elle même inférieure à celle eDD au niveau hd du plan D-D.

Dans le champs de crochets de l'objet moulé de la figure 4, les crochets sont agencés suivant des rangées et des colonnes, notamment perpendiculaires les unes aux autres.

La matière thermoplastique de moulage peut être choisie parmi les polyoléfines, les polyamides, les TPE, etc...

Dans le cas de la figure 5, les cavités du bloc d'insertion correspondant comportent une ouverture vers le canal d'aération qui est de petite section, et notamment n'est présente que d'un côté de la tête. Il en résulte une certain freinage de la matière qui ne parvient pas à épouser parfaitement les coins de la cavités et donc des formes arrondies de la tête au niveau des coins de la cavité.

En revanche, et comme représenté à la figure 11, dans le cas où l'ouverture a une plus grande section et notamment s'étend sur quasiment tout le fond de la tête, les coins sont bien formés et le crochet ne comporte pas ou peu d'arrondi.

Dans le cas où l'ouverture entre la cavité de moulage et les canaux d'aération est très grande et où en outre la viscosité de la matière permet un écoulement très fluide, la matière thermoplastique peut parvenir à s'engouffrer dans cette ouverture et faire saillie dans les canaux. Dans un tel cas, et comme représenté à la figure 12, le crochet comportera au niveau de sa tête une excroissance 40 créée par cette infiltration de la matière thermoplastique dans l'ouverture de passage vers les canaux d'aération de la cavité de moulage. Souvent dans ce cas, la transition entre les surfaces latérales et la surface intermédiaire sera formée en arête vive ou coin sur toute l'étendue de gauche à droite du crochet de la surface intermédiaire. La section transversale sans coin ou arête vive sera formée notamment au niveau de l'excroissance.

Pour mettre en évidence le gradient de courbure de la surface latérale du crochet (c'est à dire qu'au niveau de la tête la courbure est quasi nulle ou en tout moindre que la courbure au niveau de la base du crochet, on peut utiliser le test suivant :

Le champ de crochets de l'objet moulé doit être incliné de 15° par rapport à l'horizontale, inclinaison effectuée autour d'un axe parallèle à l'intersection du plan transversal et du plan de base d'une ligne de crochets.

Les crochets doivent être observés à l'aide d'un microscope de grossissement minimum 150, exemple : Microscope Electronique à Balayage, à pression variable, Hitachi S 3200N, observations en vide poussé et électrons secondaire après métallisation Au/Pd.

Pour pouvoir observer un crochet au milieu du champ de crochets, les crochets l'entourant peuvent être coupés à l'aide d'une lame de rasoir.

On a représenté des sections sensiblement rectangulaires. Elles peuvent cependant également être simples sensiblement quadrilatère, en découpant.les lames non pas à 90° par rapport au plan des plaques mais en biseau.

## Revendications

1. Objet moulé en matière thermoplastique de forme quelconque ayant une surface extérieure formant plan de base de laquelle fait saillie au moins un crochet (10) d'une pièce avec l'objet moulé, l'objet moulé et le au moins un crochet (10) ayant été formés par moulage par injection, le au moins un crochet (10) comportant une partie de base (14) et une partie de tête (15) ou d'accrochage faisant saillie de la partie de base (14), et étant délimité par des première (10) et deuxième (12) surfaces latérales s'étendant chacune sur la surface extérieure de l'objet moulé en étant séparées l'une de l'autre par une surface intermédiaire (13) formant le chant du au moins un crochet (10), **caractérisé en ce que** les tronçons de courbe (20,21), définis par les intersections des première et/ou deuxième surfaces latérales (11,12) avec les plans qui sont parallèles au plan de base (Pₒ) et qui sont à des distances h données de ce plan de base (Pₒ), ont des courbures respectives qui varient en fonction de la distance h, la courbure (22,23) du tronçon de courbe pour h=0, le plan de base et ledit plan parallèle étant confondu, étant supérieure à la courbure d'au moins un tronçon de courbe (24,25) pour une distance h correspondant sensiblement à un niveau de la tête (15) du au moins un crochet (10).

2. Objet moulé suivant la revendication 1, **caractérisé en ce que** les tronçons de courbes (20,21) des deux première et deuxième surfaces latérales (11,12) ont des courbures telles que leur concavité sont opposées.

3. Objet moulé suivant la revendication 1, **caractérisé en ce que** au moins au niveau d'une partie dite de transition de la tête (15) la transition entre au moins une des deux surfaces latérales (11,22) et la surface intermédiaire (13) se fait en douceur, c'est à dire sans partie en angle ou arête vive, notamment de manière incurvée.

4. Objet moulé suivant la revendication 1, 2 ou 3 **caractérisé en ce que** la surface intermédiaire (13) est sensiblement perpendiculaire aux deux première et deuxième surfaces latérales (11,12).

5. Objet moulé suivant l'une des revendications 1 à 4, **caractérisé en ce qu'**une première section transversale au niveau de la tête (15) du crochet (10) a une première section transversale ayant au moins un coin arrondi suivant un premier rayon de courbure, et une deuxième section transversale au niveau de la tête (15) du crochet (10) a une deuxième section transversale ayant au moins un coin arrondi suivant un deuxième rayon de courbure, la deuxième section étant plus proche de l'extrémité distale de la tête et le deuxième rayon étant supérieur au premier rayon.

6. Objet moulé suivant l'une des revendications 1 à 5, **caractérisé en ce que** l'épaisseur, ou distance entre les première et deuxième surfaces latérales, de la section transversale, ou section dans un plan parallèle au plan de base, diminue de la base (14) du crochet (10) vers la tête (15).

7. Objet moulé suivant l'une des revendications précédentes, **caractérisé en qu'**une excroissance de section transversale, transversalement aux deux surfaces latérales et à la surface intermédiaire, plus petite que la section transversale de la tête (15) de crochet (10) fait saillie de l'extrémité distale de la tête (15) du crochet (10).

8. Objet moulé suivant la revendication 7, **caractérisé en qu'** au moins une partie de l'excroissance constitue la partie dite de transition (13) de la tête (15), tandis que le reste du crochet (10) en section transversale a la forme d'un quadrilatère à quatre coins, tel qu'un carré, rectangle, losange ou analogue.

9. Objet moulé suivant l'une des revendications 7 ou 8, **caractérisé en que** la transition entre l'excroissance et la tête (15) du crochet (10) forme un épaulement ou coin.

10. Bloc d'insertion (1), destiné à être disposé dans un moule de formation d'un objet à mouler pour former au moins un crochet (10) issu d'une pièce de l'objet moulé, de préférence un champ de crochets, comportant au moins une première plaque (2) ayant sur son bord supérieur au moins une découpe (4) ayant une forme complémentaire d'un crochet et débouchant des deux surfaces latérales opposées de la plaque et de son bord supérieur (7), et au moins deux deuxièmes plaques (3) prenant en sandwich la au moins une première plaque (2), pour former une cavité ayant ladite une forme complémentaire d'un crochet, délimitée par des parois latérales formées par les deux deuxièmes plaques (3) et débouchant du bord supérieure (7) de la première plaque (2) par une ouverture, les plaques étant serrées les unes sur les autres, **caractérisé en ce que** les plaques (2,3) sont fixées les unes aux autres par un procédé de soudage par diffusion, connu sous le terme de « diffusion bonding » **en ce qu'**il est formé dans au moins une des plaques au moins une évidement auxiliaire, destiné à former, lorsque les plaques sont les unes contre les autres, au moins un canal d'aération communiquant (8), d'une part, avec au moins une partie de la au moins une cavité et, d'autre part, avec l'extérieur du bloc d'insertion (1) formé par les plaques disposées les unes contre les autres, et la pression à laquelle est réalisé le procédé de soudage par diffusion est si forte que les parois des cavités formées dans ces plaques sont déformées, de sorte que l'objet moulé est tel que défini à l'une des revendications 1 à 9.

11. Bloc d'insertion (1) suivant la revendication 10, **caractérisé en ce que** le au moins un canal (8) est réalisé de manière à communiquer avec la partie destinée à former la tête des crochets de la cavité.

12. Bloc d'insertion (1) suivant l'une des revendications 10 à 11 précédentes, **caractérisé en ce que** le canal ou les canaux d'aération (8) présentent une section transversale en échelon, constituée d'une première partie de petite section et d'une deuxième partie de plus grande section que la petite section, la petite section étant destinée à réaliser la communication avec la partie de tête de la cavité de forme complémentaire des crochets (10), de sorte que de l'air peut passer dans cette section mais pas de la matière thermoplastique, et la section de grande dimension permet une évacuation rapide de l'air qui passe de la petite section dans la grande section, elle-même en contact avec l'extérieur.

13. Bloc d' insertion (1) suivant l'une des revendications 10 à 12 précédentes, **caractérisé en ce que** la section transversale du ou des canaux (8) est évasée, partant d'une petite dimension par laquelle peut passer de l'air mais pas de la matière thermoplastique injectée, pour atteindre une grande dimension permettant une évacuation rapide de l'air.

14. Bloc d'insertion (1) suivant l'une des revendications 10 à 13 précédentes, **caractérisé en ce que** la au moins une découpe auxiliaire est réalisée dans la au moins une première plaque (2).

15. Bloc d'insertion (1) suivant l'une des revendications 10 à 14 précédente, **caractérisé en ce que** les deuxièmes plaques (3) sont des plaques sans découpe.

16. Bloc d'insertion (1) suivant l'une des revendications 10 à 15 précédentes, **caractérisé en ce que** le diamètre de la section équivalente de l'ouverture de communication entre la cavité et le canal d'aération (8) est inférieure à 5.10⁻²mm, de préférence comprise entre 1.10⁻² mm et 4.10⁻² mm.

## Claims

1. Moulded object in thermoplastic material in any shape having an outer surface forming a base plane from which protrudes at least one hook (10) in one piece with the moulded object, the moulded object and the at least one hook (10) having been formed by injection moulding, the at least one hook (10) comprising a base part (14) and a head or hooking part (15) protruding from the base part (14), and being delimited by first (11) and second (12) lateral surfaces each extending on the outer surface of the moulded object being separated from each other by an intermediate surface (13) forming the edge of the at least on hook (10), **characterized in that** the curve sections (20,21), defined by the intersections of the first and/or second lateral surfaces (11,12) with the planes which are in parallel with the base plane (Po) and which are at given distances h from this base plane (Po), have respective curvatures which vary as a function of the distance h, the curvature (22,23) of the curve section for h = 0, the base plane and said parallel plane merging, being greater than the curvature of at least one curve section (24,25) for a distance h substantially corresponding to a level of the head (15) of the at least one hook (10).

2. Moulded object according to claim 1, **characterized in that** the curve sections (20,21) of the two first and second lateral surfaces (11,12) have curvatures such that their concavities are opposed.

3. Moulded object according to claim 1, **characterized in that** at least at the level of a so-called transition part of the head (15), the transition between at least one of the two lateral surfaces (11,12) and the intermediate surface (13) is smooth, i.e., with no angular parts or sharp edges, in particular curved.

4. Moulded object according to claim 1, 2 or 3, **characterized in that** the intermediate surface (13) is substantially perpendicular to the two first and second lateral surfaces (11,12).

5. Moulded object according to one of claims 1 to 4, **characterized in that** a first cross-section at the level of the head (15) of the hook (10) has a first cross-section having at least one rounded corner having a first radius of curvature, and a second cross-section at the level of the head (15) of the hook (10) has a second cross-section having at least one rounded corner having a second radius of curvature, wherein the second cross-section is closer to the distal end of the head and the second radius is greater than the first radius.

6. Moulded object according to one of claims 1 to 5, **characterized in that** the thickness, or distance between the first and second lateral surfaces, of the transverse section, or cross-section in a plane parallel to the base plane, decreases from the base (14) of the hook (10) towards the head (15).

7. Moulded object according to one of the preceding claims, **characterized in that** a cross-sectional development, transversally to the two lateral surfaces and to the intermediate surface, smaller than the cross-section of the head (15) of the hook (10) protrudes from the distal end of the head (15) of the hook (10).

8. Moulded object according to claim 7, **characterized in that** at least one part of the development forms the so-called transition part (13) of the head (15) whilst the remainder of the hook (10) in cross-section has the shape of a four-cornered quadrilateral such as a square, rectangle, rhombus or the like.

9. Moulded object according to one of claims 7 or 8, **characterized in that** the transition between the development and the head (15) of the hook (10) forms a shoulder or corner.

10. Insertion block (1) intended to be disposed in a mould for forming an object to be moulded to form at least one hook (10) in one piece with the moulded object, preferably a hook field, comprising at least one first plate (2), having on its upper edge at least one cut-out (4) having a shape complementary to a hook and issuing out of the two opposite lateral surfaces of the plate and of its upper edge (7), and at least two second plates (3) sandwiching the at least one first plate (2) therebetween, to form a cavity having said shape complementary to a hook, delimited by lateral walls formed by the two second plates (3) and issuing out of the upper edge (7) of the first plate (2) via an opening, the plates (2,3) being clamped together, **characterized in that** the plates are fixed to each other by a process of bonding by diffusion, also known as "diffusion bonding", **in that** there is formed in at least one of the plates at least one auxiliary recess which is intended to form, when the plates are against each other, at least one aeration channel (8) communicating on the one hand with at least one part of the at least one cavity and on the other hand with the exterior of the insertion block formed by the plates disposed one against the other, and wherein the pressure at which the diffusion bonding process is carried out is so high that the walls of cavities formed in the said plates are deformed, whereby the moulded object is such as defined in one of claims 1 to 9.

11. Insertion block (1) according to claim 10, **characterized in that** the at least one channel (8) is formed so as to communicate with the part intended to form the head of the hooks of the cavity.

12. Insertion block (1) according to one of the preceding claims 10 to 11, **characterized in that** the aeration channel(s) (8) has/have a stepped cross-section formed by a first part having a small cross-section and a second part having a larger cross-section than the small cross-section, wherein the small cross-section is intended to effect the communication with the head part of the cavity having a shape complementary to the hooks (10) such that air can pass into this cross-section but not thermoplastic material, and the large cross-section permits quick venting of the air which passes from the small cross-section into the large cross-section, itself in contact with the outside.

13. Insertion block (1) according to one of the preceding claims 10 to 12, **characterized in that** the cross-section of the channel(s) (8) is flared, starting with a small dimension though which air can pass but not injected thermoplastic material and finishing with a large dimension permitting quick venting of the air.

14. Insertion block (1) according to one of the preceding claims 10 to 13, **characterized in that** the at least one auxiliary cut-out is formed in the at least one first plate (2).

15. Insertion block (1) according to one of the preceding claims 10 to 14, **characterized in that** the second plates (3) are plates without cut-outs.

16. Insertion block (1) according to one of the preceding claims 10 to 15, **characterized in that** the diameter of the equivalent cross-section of the opening for communication between the cavity and the aeration channel (8) is less than 5.10⁻² mm, preferably between 1.10⁻² mm and 4.10⁻² mm.

## Patentansprüche

1. Gegossener Gegenstand aus einem Thermoplast, mit beliebiger Form, der eine eine Grundebene bildende Außenseite aufweist, von der wenigstens ein Haken (10) vorspringt, der mit dem gegossenen Gegenstand einstückig ausgebildet ist, wobei der gegossene Gegenstand und der wenigstens eine Haken (10) durch Spritzgießen gebildet worden sind, wobei der wenigstens eine Haken (10) einen Basisteil (14) und einen von dem Basisteil (14) vorspringenden Kopf- oder Einhakteil (15) umfaßt und durch eine erste Seitenfläche (11) und eine zweite Seitenfläche (12) begrenzt ist, die sich jeweils an der Außenseite des gegossenen Gegenstandes erstrecken und dabei durch eine Zwischenfläche (13), welche die Schmalseite des wenigstens einen Hakens (10) bildet, voneinander getrennt sind, **dadurch gekennzeichnet, daß** die Kurvenabschnitte (20, 21), die durch die Schnittpunkte der ersten und/oder der zweiten Seitenfläche (11, 12) mit den Ebenen, die zu der Grundebene (Po) parallel verlaufen und die sich in gegebenen Abständen h von dieser Grundebene (Po) befinden, definiert werden, jeweilige Krümmungen aufweisen, die in Abhängigkeit des Abstandes h variieren, wobei die Krümmung (22, 23) des Kurvenabschnittes bei h = 0 - wobei die Grundebene und die Parallelebene zusammenfallen - größer ist als die Krümmung wenigstens eines Kurvenabschnittes (24, 25) bei einem Abstand h, der im wesentlichen einer Höhe des Kopfes (15) des wenigstens einen Hakens (10) entspricht.

2. Gegossener Gegenstand nach Anspruch 1, **dadurch gekennzeichnet, daß** die Kurvenabschnitte (20, 21) der beiden Seitenflächen, der ersten und zweiten (11, 12), derartige Krümmungen aufweisen, daß ihre Konkavität entgegengesetzt ist.

3. Gegossener Gegenstand nach Anspruch 1, **dadurch gekennzeichnet, daß** wenigstens im Bereich eines sogenannten Übergangsteils des Kopfes (15) der Übergang zwischen wenigstens einer der beiden Seitenflächen (11, 12) und der Zwischenfläche (13) sanft, das heißt ohne winkeligen oder scharfkantigen Teil, insbesondere gebogen erfolgt.

4. Gegossener Gegenstand nach Anspruch 1, 2 oder 3, **dadurch gekennzeichnet, daß** die Zwischenfläche (13) zu den beiden Seitenflächen, der ersten und zweiten (11, 12), im wesentlichen senkrecht verläuft.

5. Gegossener Gegenstand nach einem der Ansprüche 1 bis 4, **dadurch gekennzeichnet, daß** ein erster Querschnitt im Bereich des Kopfes (15) des Hakens (10) einen ersten Querschnitt mit wenigstens einer abgerundeten Ecke entlang einem ersten Krümmungsradius aufweist und ein zweiter Querschnitt im Bereich des Kopfes (15) des Hakens (10) einen zweiten Querschnitt mit wenigstens einer abgerundeten Ecke entlang einem zweiten Krümmungsradius aufweist, wobei der zweite Querschnitt näher dem distalen Ende des Kopfes gelegen ist und der zweite Radius größer als der erste Radius ist.

6. Gegossener Gegenstand nach einem der Ansprüche 1 bis 5, **dadurch gekennzeichnet, daß** die Dicke, oder der Abstand zwischen der ersten und der zweiten Seitenfläche, des Querschnitts, oder Schnitts in einer zu der Grundebene parallelen Ebene, von der Basis (14) des Hakens (10) zum Kopf (15) hin abnimmt.

7. Gegossener Gegenstand nach einem der vorhergehenden Ansprüche, **dadurch gekennzeichnet, daß** eine Ausbauchung mit einem Querschnitt - quer zu den beiden Seitenflächen und zu der Zwischenfläche - kleiner als der Querschnitt des Kopfes (15) des Hakens (10) von dem distalen Ende des Kopfes (15) des Hakens (10) vorspringt.

8. Gegossener Gegenstand nach Anspruch 7, **dadurch gekennzeichnet, daß** wenigstens ein Teil der Ausbauchung den sogenannten Übergangsteil (13) des Kopfes (15) bildet, während der Rest des Hakens (10) im Querschnitt die Form eines Vierecks, wie eines Quadrates, eines Rechtecks, einer Raute oder ähnlichem aufweist.

9. Gegossener Gegenstand nach einem der Ansprüche 7 oder 8, **dadurch gekennzeichnet, daß** der Übergang zwischen der Ausbauchung und dem Kopf (15) des Hakens (10) eine Schulter oder Ecke bildet.

10. Einsatzblock (1), der dazu bestimmt ist, in einer Form zur Bildung eines zu gießenden Gegenstandes angeordnet zu werden, um wenigstens einen mit dem gegossenen Gegenstand einstückig ausgebildeten Haken (10), vorzugsweise ein Feld von Haken zu bilden, umfassend wenigstens eine erste Platte (2), die an ihrem oberen Rand wenigstens einen Ausschnitt (4) aufweist, der eine zu einem Haken ergänzende Form aufweist und der aus den beiden gegenüberliegenden Seitenflächen der Platte und aus ihrem oberen Rand (7) ausmündet, sowie wenigstens zwei zweite Platten (3), zwischen denen die wenigstens eine erste Platte (2) sandwichartig angeordnet ist, um einen Hohlraum zu bilden, der die eine zu einem Haken ergänzende Form aufweist, durch von den beiden zweiten Platten (3) gebildete Seitenwände begrenzt ist und aus dem oberen Rand (7) der ersten Platte (2) über eine Öffnung ausmündet, wobei die Platten aufeinander gedrückt sind, **dadurch gekennzeichnet, daß** die Platten (2, 3) durch ein Diffusionsschweißverfahren, das unter dem Begriff "Diffusion Bonding" bekannt ist, aneinander befestigt sind, daß in wenigstens einer der Platten wenigstens eine Hilfsausnehmung ausgebildet ist, die dazu bestimmt ist, wenn sich die Platten aneinander befinden, wenigstens einen Belüftungskanal (8) zu bilden, der einerseits mit wenigstens einem Teil des wenigstens einen Hohlraums und andererseits mit der Außenseite des Einsatzblocks (1), der durch die aneinander angeordneten Platten gebildet ist, in Verbindung steht, und der Druck, mit dem das Diffusionsschweißverfahren durchgeführt wird, so hoch ist, daß die Wände der in diesen Platten ausgebildeten Hohlräume verformt werden, so daß der gegossene Gegenstand so ist wie in einem der Ansprüche 1 bis 9 definiert.

11. Einsatzblock (1) nach Anspruch 10, **dadurch gekennzeichnet, daß** der wenigstens eine Kanal (8) derart ausgebildet ist, daß er mit dem Teil in Verbindung steht, der dazu bestimmt ist, den Kopf der Haken des Hohlraums zu bilden.

12. Einsatzblock (1) nach einem der vorhergehenden Ansprüche 10 bis 11, **dadurch gekennzeichnet, daß** der Belüftungskanal oder die Belüftungskanäle (8) einen abgestuften Querschnitt aufweist bzw. aufweisen, der aus einem ersten Teil mit kleinem Querschnitt und aus einem zweiten Teil mit größerem Querschnitt als der kleine Querschnitt besteht, wobei der kleine Querschnitt dazu bestimmt ist, die Verbindung mit dem Kopfteil des Hohlraums mit der zu den Haken (10) ergänzenden Form herzustellen, so daß in diesen Querschnitt Luft, aber kein Thermoplast gelangen kann, und der Querschnitt großer Abmessung ein schnelles Abführen der Luft ermöglicht, die von dem kleinen Querschnitt in den großen Querschnitt gelangt, der selbst in Kontakt mit der Außenseite steht.

13. Einsatzblock (1) nach einem der vorhergehenden Ansprüche 10 bis 12, **dadurch gekennzeichnet, daß** der Querschnitt des Kanals oder der Kanäle (8) konisch erweitert ist, ausgehend von einer kleinen Abmessung, durch die Luft, aber kein eingespritzter Thermoplast gelangen kann, bis hin zu einer großen Abmessung, die ein schnelles Abführen der Luft ermöglicht.

14. Einsatzblock (1) nach einem der vorhergehenden Ansprüche 10 bis 13, **dadurch gekennzeichnet, daß** der wenigstens eine Hilfsausschnitt in der wenigstens einen ersten Platte (2) ausgebildet ist.

15. Einsatzblock (1) nach einem der vorhergehenden Ansprüche 10 bis 14, **dadurch gekennzeichnet, daß** die zweiten Platten (3) Platten ohne Ausschnitt sind.

16. Einsatzblock (1) nach einem der vorhergehenden Ansprüche 10 bis 15, **dadurch gekennzeichnet, daß** der Durchmesser des äquivalenten Querschnitts der Verbindungsöffnung zwischen dem Hohlraum und dem Belüftungskanal (8) kleiner als 5.10⁻² mm ist, vorzugsweise im Bereich zwischen 1.10⁻² mm und 4.10⁻² mm liegt.
